# EUROPÄISCHE PATENTSCHRIFT

(11) **EP 0 956 760 B1**
(45) Veröffentlichungstag und Bekanntmachung des Hinweises auf die Patenterteilung: **18.09.2002**
(21) Anmeldenummer: 99108051.6
(22) Anmeldetag: 23.04.1999
(51) Int. Cl.: A01D 90/14

(54) **Selbstladewagen mit Abschaltautomatik**
Self-loading forage box with automatic shut-off
Remorque autochargeuse avec stop automatique de surcharge

(30) Priorität: 09.05.1998 DE 29811854 U
(43) Veröffentlichungstag der Anmeldung: 17.11.1999
(73) Patentinhaber: CLAAS SAULGAU GMBH, D-88340 Saulgau (DE)
(72) Erfinder: Geng, Manfred, 88348 Saulgau (DE)

(56) Entgegenhaltungen:
- CH-A- 452 264
- DE-A- 4 124 145
- DE-B- 1 217 685
- DE-U- 9 013 748

## Beschreibung

Die Erfindung betrifft eine Abschaltautomatik für Selbstladewagen gemäß dem Oberbegriff des Anspruchs 1. Bei derartigen Selbstladewagen wird das auf dem Boden liegende Erntegut über eine mit Zinken versehene Aufsammeleinrichtung einem Schneid- und Förderrotor zugeführt. Dieser nimmt das langhalmige Erntegut an und fördert es an in den Guttransportraum hineinragenden Schneidorganen vorbei, wobei es in Abhängigkeit von der Anzahl der in den Guttransportraum hineinragenden Schneidorgane mehr oder weniger intensiv zerkleinert und anschließend in den erntegutaufnehmenden Behälter des Selbstladewagens gefördert wird. Untenseitig sind die erntegutaufnehmenden Behälter derartiger Selbstladewagen mit Fördereinrichtungen versehen, die das vom Förder- und Schneidrotor im allgemeinen zugfahrzeugseitig in den Behälter geförderte Erntegut im gesamten Behälter gleichmäßig verteilen, indem beispielsweise ein Kratzboden in bestimmten Abständen eingeschaltet wird, wobei dieses Einschaltsignal u.a. wie in der europäischen Patentschrift EP-B-0 477 716 offenbart, durch zugfahrzeugseitig am Behälter des Selbstladewagens angebrachte Druckaufnehmer ausgelöst werden kann, die bei Überschreitung eines voreingestellten Druckwertes automatisch den Kratzboden zuschalten. Auch bei anderen aus dem Stand der Technik bekannten Kratzbodensteuerungen ist es so, daß sich im Bereich des Schneid- und Förderrotors immer erst eine bestimmte Menge Erntegut angesammelt haben muß, bevor es durch den Kratzboden aus diesem Bereich gefördert wird. Bei Erntegut mit einem hohen Feuchtegehalt und am aufnahmekapazitätsbedingten Ende des Befüllvorganges arbeitet der Schneid- und Förderrotor gegen einen stetig zunehmenden Widerstand des bereits im Behälter des Selbstladewagens befindlichen Erntegutes. Entsprechend der deutschen Patentschrift DE-C-11 60 229 wird bei gattungsgemäßen Selbstladewagen die Antriebsenergie vom Schneid- und Förderrotor direkt auf die Aufsammeleinrichtung übertragen, ohne daß dieser Antriebsstrang durch Einfügung eines Kupplungselements unterbrechbar wäre. Erfordert nun das Arbeiten mit einem solchen Selbstladewagen beispielsweise aufgrund von im Arbeitsbereich befindlichen Hindernissen oder am Vorgewende ein Abschalten der Aufsammeleinrichtung, so wird bei derartigen Selbstladewagenausführungen immer auch der Schneid- und Förderrotor vom Antrieb getrennt. Weist der Selbstladewagen nun beim Wiederzuschalten des Schneid- und Förderrotors sowie der Aufsammeleinrichtung bereits einen hohen Befüllungsgrad auf oder hat das auf dem Selbstladewagen befindliche Erntegut einen hohen Feuchteanteil, so muß der über einen Teil seines Umfangs mit dem Erntegut in Kontakt stehende Schneid- und Förderrotor ein hohes Anlaufmoment überwinden, wodurch die einzelnen Elemente des Antriebsstranges (Zugmittel, Getriebe etc.) hohen Belastungen und damit einem erhöhten Verschleiß ausgesetzt sind.

Der Erfindung liegt deshalb die Aufgabe zugrunde, den Antrieb für einen Selbstladewagen gemäß dem Oberbegriff des Anspruchs 1 so zu gestalten, daß die Belastung des Antriebsstranges und damit auch dessen Verschleiß deutlich verringert werden kann.

Erfindungsgemäß wird die Aufgabe durch eine Abschaltautomatik für Selbstladewagen mit den kennzeichnenden Merkmalen des Anspruchs 1 gelöst. Eine derartige Ausgestaltung einer Abschaltautomatik realisiert auf konstruktiv einfache Weise ein Abschalten der Aufsammeleinrichtung, ohne daß gleichzeitig auch der Schneid- und Förderrotor vom Antrieb getrennt wird. Dadurch wird gewährleistet, daß die Anlaufmoment-bedingten Belastungen des Antriebsstranges abnehmen und damit letztlich dessen Verschleiß verringert wird. In konstruktiv einfacher Weise wird hierfür eine Schaltkupplung in den Antriebsstrang zwischen Schneid- und Förderrotor und die Aufsammeleinrichtung integriert, die in vorteilhafter Weise hydraulisch schaltbar ist, so daß für deren Betätigung der zur Höhenverstellung der Aufsammeleinrichtung vorhandene Hydraulikkreislauf genutzt werden kann.

In einer weiteren vorteilhaften Ausgestaltung ist vorgesehen, den Schaltvorgang der Kupplung druck- oder zeitabhängig selbsttätig auszulösen. Dadurch entfallen für den Fahrer des Trägerfahrzeugs zusätzliche Betätigungsaufgaben.

Vorteilhafte Ausgestaltungen sind Gegenstand weiterer Unteransprüche und werden nachfolgend anhand eines in Zeichnungen dargestellten Ausführungsbeispiels näher erläutert.

Es zeigen
- Figur 1: eine Teil-Seitenansicht eines Selbstladewagens mit schematisch dargestellter neu erungsgemäßer Abschaltautomatik
- Figur 2: eine Prinzipdarstellung der neuerungsgemäßen Abschaltautomatik
- Figur 3: eine weitere Ausführung des die Schaltkupplung aus- und einrückenden Kipphebels nach Figur 2.

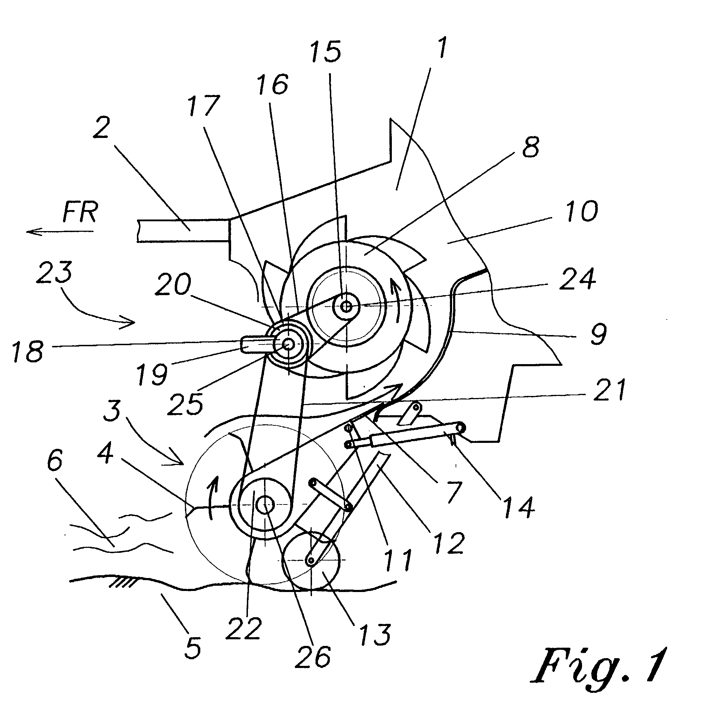

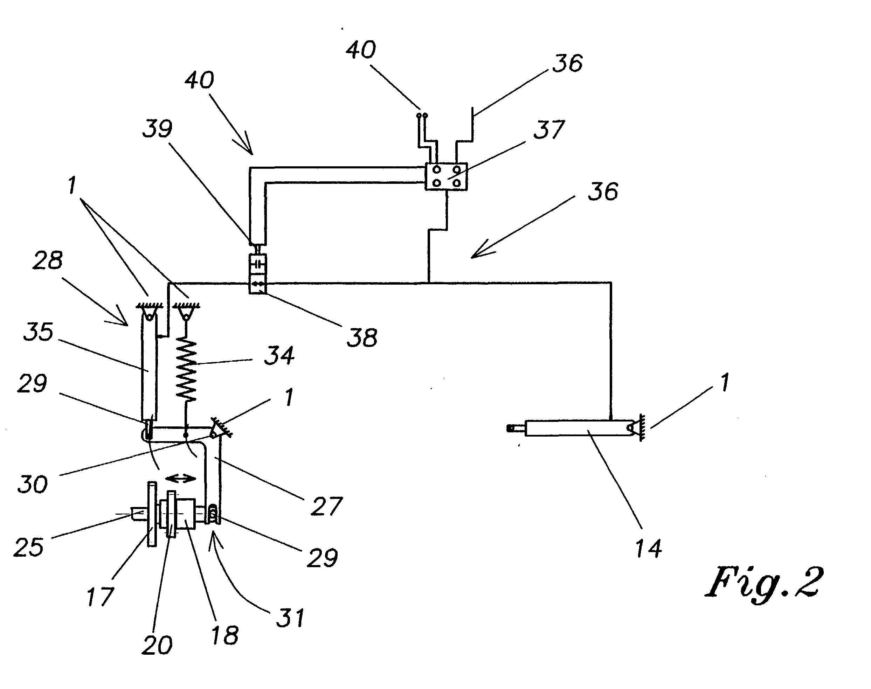

In Figur 1 ist der zugfahrzeugseitige Bereich eines gattungsgemäßen Selbstladewagens 1 dargestellt, der über einen nicht näher beschriebenen Träger 2 an einem nicht dargestellten Trägerfahrzeug adaptierbar ist. Der Selbstladewagen 1 ist in seinem zugfahrzeugseitigen unteren Bereich mit einer als Pick-up ausgeführten Aufsammeleinrichtung 3 versehen, deren umlaufenden Zinken 4 das in Fahrtrichtung FR vor der Aufsammeleinrichtung 3 auf dem Boden 5 liegende Erntegut 6 oberschlächtig aufnehmen und über einen Förderboden 7 dem Schneid- und Förderrotor 8 zuführen. Der Schneid- und Förderrotor 8 ist über einen bestimmten Abschnitt seines Umfangs im rückwärtigen untenseitigen Bereich von einem mit aus dem Stand der Technik bekannten und deshalb nicht näher dargestellten Schneidelementen durchsetzten Förderboden 9 umschlossen auf dem das Erntegut 6 vom Schneid- und Förderrotor 8 in den Erntegutspeicher 10 des Selbstladewagens 1 gefördert wird. Die Aufsammeleinrichtung 3 ist über eine quer zur Fahrtrichtung FR verlaufende Achse 11 drehbar am Selbstladewagen 1 angebracht und stützt sich über wenigstens ein am Selbstladewagen 1 und der Aufsammeleinrichtung 3 angelenktes Gestänge 12 dessen freies Ende wenigstens ein Laufrad 13 trägt auf dem Boden 5 ab. Zur Höhenverstellung der Aufsammeleinrichtung 3 ist zwischen der Aufsammeleinrichtung 3 und dem Selbstladewagen 1 ein Verstellmittel, vorzugsweise ein Hubzylinder 14 zwischengeschaltet, der ein Verschwenken der Aufsammeleinrichtung 3 um Achse 11 ermöglicht. Über nicht dargestellte Antriebsorgane wird dem Schneid- und Förderrotor 8 vom Trägerfahrzeug Antriebsenergie zugeführt, die über weitere Übertragungsglieder 15-22 vom Schneid- und Förderrotor 8 zur Aufsammeleinrichtung 3 übertragen wird. Der aus den Übertragungsgliedern 15-22 bestehende Antriebsstrang 23 kann als Zugmittelgetriebe ausgeführt sein, wobei die Zugmittel 16, 21 als Ketten oder Riemen und die auf den Wellen 24-26 fixierten Räder 15, 17, 20, 22 entsprechend als Kettenräder oder Riemenscheiben ausgeführt sind. In einer weiteren vorteilhaften Ausführungsform kann aber auch wenigstens einer der Zugmittelantriebe 15-17 und 20-22 durch nicht dargestellte und aus dem Stand der Technik hinlänglich bekannte Strinradpaare ersetzt werden. Die auf der Zwischenwelle 25 fixierte Schaltkupplung 18 und das in Figur 1 nur angedeutete schaltvorgangauslösende Element 19 sind mit den übrigen Elementen der erfindungsgemäßen Abschaltautomatik in Figur 2 detailliert dargestellt.

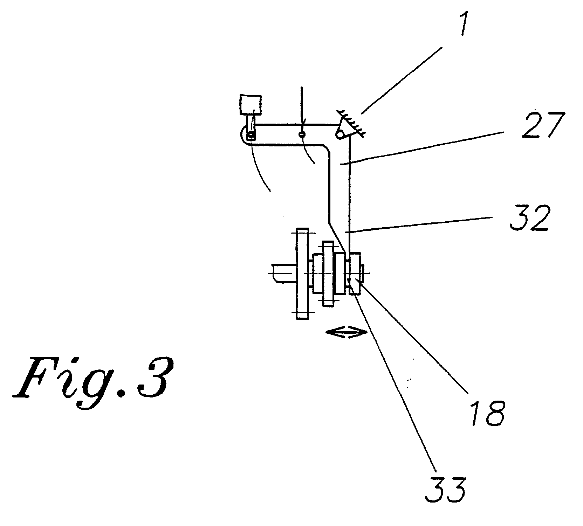

Auf der Zwischenwelle 25, deren Fixierung am Selbstladewagen 1 nicht näher dargestellt ist, sind Kettenräder 17, 20 und eine diesen Kettenrädern 17, 20 zugeordnete Schaltkupplung 18 befestigt. Die Schaltkupplung 18 steht in Wirkverbindung mit einem am Selbstladewagen 1 drehbar gelagerten Kipphebel 27, der anderenends ebenfalls drehbar mit der Kolbenstange 29 des als Hubzylinder 28 ausgeführten schaltvorgangauslösenden Elements 19 (Figur 1) verbunden ist. Die Wirkverbindung des Kipphebels 27 mit der Schaltkupplung 18 ist so ausgeführt, das die mögliche Schwenkbewegung des Kipphebels 27 um Achse 30 zu einer Translationsbewegung des nicht näher dargestellten ein- und auskuppelnden Teils der Schaltkupplung 18 führt. Dabei kann einerseits das kupplungsseitige Ende des Kipphebels 27 gabelförmig ausgeführt sein und der axial verschiebbare Teil der Schaltkupplung 18 über ein als Bolzen 29 ausgeführtes, von der schlitzförmigen Öffnung 31 des Kipphebels 27 aufnehmbares Gleitelement verfügen. Andererseits kann das kupplungsseitige Ende des Kipphebels 27 aber auch als Schaltklaue 32 (Figur 3) ausgeführt sein, die beim Verschwenken des Kipphebels 27 in eine im verschiebbaren Teil der Schaltkupplung 18 vorhande Führungsnut 33 eingreift und aus dieser bei umgekehrter Kipphebelbewegung auch wieder ausrücken kann, wobei die Rückstellung des axial verschiebbaren Teils der Schaltkupplung 18 in seine Ausgangslage auf an sich bekannte Weise mittels nicht dargestellter Rückholfedern unterstützt werden kann. Wird der Hubzylinder 28 einfachwirkend ausgeführt, so ist der Kipphebel 27 hubzylinderseitig mit einer anderenends am Selbstladewagen 1 befestigten Zugfeder 34 versehen, die bei drucklosem Hubzylinder 28 dafür sorgt, daß sich dessen Kolbenstange 29 wieder in den Kolben 35 schiebt. Im einfachsten Fall ist der Hubzylinder 28 mit dem Hubzylinder 14 der Aufsammeleinrichtung 3 sowie der nicht dargestellten Druckquelle des Trägerfahrzeugs über ein hydraulisches Leitungssystem 36 mit einem Schaltgerät 37 verbunden, bei dessen Betätigung durch den Trägerfahrzeugführer aufgrund eines aufeinander abgestimmten Kolbenflächenverhältnisses der Hubzylinder 14 und 28 zuerst Hubzylinders 14 die Aufsammeleinrichtung 3 anhebt und danach die Kolbenstange 29 aus Hubzylinder 28 ausfährt und über Kipphebel 27 ein Schaltvorgang an der Schaltkupplung 18 ausgelöst wird, der die Energieübertragung zwischen Förder-und Schneidrotor 8 und der Aufsammeleinrichtung 3 selbsttätig unterbricht. In einer weiteren Ausführungsform ist vorgesehen, dem Hubzylinder 28 ein Wegeventil 38 zuzuordnen, dessen Steuerteil 39 über ein elektrisches Leitungssystem 40 ebenfalls mit dem Schaltgerät 37 verbunden ist.

Dabei wird die Ansteuerung des Wegeventils 38 vom Steuergerät 37 dergestalt realisiert, daß Wegeventil 37 erst dann von der Sperr- in die Durchlaßstellung umschaltet, wenn nach Betätigung des Steuergerätes 37 durch den Trägerfahrzeugführer ein Zeitintervall Δt verstrichen ist, welches so einstellbar ist, daß die Aufsammeleinrichtung 3 durch Hubzylinder 14 zuvor sicher in ihre obere Stellung verschwenkt wurde. Sind die Hubzylinder 14 und 28 in Arbeitsstellung (Figur 2), wobei Zylinder 28 die Kupplung 18 in eingerückter Stellung hält und Hubzylinder 14 die Aufsammeleinrichtung 3 in tiefster Stellung über dem Boden 5 führt, steht das Wegeventil 38 in Durchlaßstellung, so daß das in den Hubzylindern 14, 28 befindliche Medium drucklos über das Leitungssystem 36 abfließen kann. Löst der Tragerfahrzeugführer am Steuergerät 37 den Befehl zum Heben der Aufsammeleinrichtung 3 aus, schaltet zuerst Wegeventil 38 in Sperrstellung, so daß nur Hubzylinder 14 druckbeaufschlagt wird. Nach Ablauf eines Zeitintervalls Δt schaltet Wegeventil 38 zurück in Durchlaßstellung und die aus dem nun ebenfalls druckbeaufschlagten Hubzylinder 28 ausfahrende Kolbenstange 29 versetzt den Kipphebel 27 in eine Schwenkbewegung, die eine axiale Verstellung der Schaltkupplung 18 hervorruft, wodurch die auf der Zwischenwelle 25 angeordneten, die Antriebsenergie vom Schneid- und Förderrotor 8 auf die Aufsammeleinrichtung 3 übertragenden Glieder 17 und 20 voneinander getrennt werden, so daß die Drehbewegung der Aufsammletrommel 3 unterbrochen und der Schneid- und Förderrotor 8 weiter angetrieben wird. Der Rückgang beider Hubzylinder 14, 28 in die oben beschriebene Arbeitsstellung wird durch den in jedem Trägerfahrzeug vorhandenen Hydraulikkreislauf realisiert, der über eine Schaltstellung verfügt, in der der Hydraulikkreislauf des Trägerfahrzeugs und das mit ihm verbundene Leitungssytem 36 der adaptierten landwirtschaftlichen Arbeitsmaschine, im beschriebenen Beispiel ein Selbstladewagen 1 drucklos ist.

Die erfindungsgemäße Abschaltautomatik ist nicht auf die mit schaltbarem Wegeventil 39 beschriebene Ausführung beschränkt. In einer modifizierten Steuerung kann das Wegeventil 39 beispielsweise durch aus dem Stand der Technik bekannte entsperrbare Rückschlagventile ersetzt werden, die ebenfalls funktionsgleich von einer Sperr- in eine Durchlaßstellung umschaltbar sind.

### Bezugszeichenliste

- 1: Selbstladewagen
- 2: Träger
- 3: Aufsammeleinrichtung
- 4: Zinken
- 5: Boden
- 6: Erntegut
- 7: Förderboden
- 8: Schneid- und Förderrotor
- 9: Förderboden
- 10: Erntegutspeicher
- 11: Achse
- 12: Gestänge
- 13: Laufrad
- 14: Hubzylinder
- 15: Kettenrad/Riemenscheibe
- 16: Zugmittel
- 17: Kettenrad/Riemenscheibe
- 18: Schaltjupplung
- 19: schaltvorgangauslösendes Element, allgemein
- 20: Kettenrad/Riemenscheibe
- 21: Zugmittel
- 22: Kettenrad/Riemenscheibe
- 23: Antriebsstrang
- 24: Welle
- 25: Zwischenwelle
- 26: Welle
- 27: Kipphebel
- 28: Hubzylinder
- 29: Kolbenstange
- 30: Achse
- 31: schlitzförmige Öffnung
- 32: Schaltklaue
- 34: Zugfeder
- 35: Kolben
- 36: hydraulisches Leitungssystem
- 37: Schaltgerät
- 38: Wegeventil
- 39: Steuerteil
- 40: elektrisches Leitungssystem

## Patentansprüche

1. Selbstladewagen (1) zum Transportieren von Erntegut, (6) dem eine, das Erntegut vom Boden aufnehmende durch wenigstens einen Hubzylinder (14) höhenverstellbare Aufsammeleinrichtung (3) zugeordnet ist, die das Erntegut (6) an eine als Förder- und Schneidrotor (8) ausgeführte Fördereinrichtung übergibt, wobei die Aufsammeleinrichtung (3) und die als Förder- oder Schneidrotor (8) ausgeführte Fördereinrichtung in einem aus mehreren Antriebsgliedern (15-22) bestehenden Antriebsstrang (23) angeordnet sind,
**dadurch gekennzeichnet,**
**dass** der Antriebsstrang (23) in der Weise unterbrechbar ausgeführt ist, dass die Energieübertragung zur Aufsammeleinrichtung (3) selbsttätig abschaltbar ist, während der Schneid- und Förderrotor (8) weiter antreibbar sind.

2. Selbstladewagen nach Anspruch 1,
**dadurch gekennzeichnet,**
**daß** dem Antriebsstrang (23) zur Realisierung seiner Unterbrechbarkeit eine Schaltkupplung (18) zugeordnet ist.

3. Selbstladewagen nach einem oder mehreren der vorhergehenden Ansprüche,
**dadurch gekennzeichnet,**
**daß** der Schaltvorgang der Schaltkupplung (18) über ein Verstellmittel (28) ausgelöst wird, welches über ein Leitungssystem (36) und ein Steuergerät (37) mit dem als Hubzylinder (14) ausgeführten Verstellmittel der Aufsammeleinrichtung (3) verbunden ist.

4. Selbstladewagen nach einem oder mehreren der vorhergehenden Ansprüche,
**dadurch gekennzeichnet,**
**daß** der Hubzylinder (14) der Aufsammeleinrichtung (3) und der Hubzylinder (28) zur Auslösung des Schaltvorganges in ihrem Querschnitt so aufeinander abgestimmt sind, daß bei Druckbeaufschlagung des beide Hubzylinder (14, 28) verbindenden Leitungssystems (36) stets zuerst der Hubzylinder (14) die Aufsammeleinrichtung (3) anhebt und erst dann der Hubzylinder (28) den Schaltvorgang an der Schaltkupplung (18) auslöst.

5. Selbstladewagen nach einem oder mehreren der vorhergehenden Ansprüche,
**dadurch gekennzeichnet,**
**daß** dem hydraulischen Leitungssystem (36) ein vom Steuergerät (37) elektrisch steuerbares als Wegeventil (38) ausgeführtes Stellglied zugeordnet ist, welches vom Steuergerät (37) so angesteuert werden kann, daß bei Druckbeaufschlagung des beide Hubzylinder (14, 28) verbindenden Leitungssystems (36) stets zuerst der Hubzylinder (14) die Aufsammeleinrichtung (3) anhebt und erst dann der Hubzylinder (28) den Schaltvorgang an der Schaltkupplung (18) auslöst.

6. Selbstladewagen nach Anspruch 5,
**dadurch gekennzeichnet,**
**daß** das Schaltgerät (37) das Wegeventil (38) zeit- oder druckabhängig schalten kann.

7. Selbstladewagen nach Anspruch 6,
**dadurch gekennzeichnet,**
**daß** die Zeit- oder Druckabhängigkeit des Schaltgerätes (37) einstellbar ist.

8. Selbstladewagen nach einem oder mehreren der vorhergehenden Ansprüche,
**dadurch gekennzeichnet,**
**daß** der schaltvorgangauslösende Hubzylinder (28) nicht direkt an der Schaltkupplung angreift, sondern daß dessen Bewegung der Kolbenstange (29) mittels weiterer am Selbstladewagen (1) angeordneter Glieder (27, 29, 34) auf die Schaltkupplung übertragen wird.

9. Selbstladewagen nach einem oder mehreren der vorhergehenden Ansprüche,
**dadurch gekennzeichnet,**
**daß** der schaltvorgangauslösende Hubzylinder (28) einfachwirkend ausgeführt ist, wobei dessen Kolbenstange (29) bei drucklosem Hubzylinder (28) durch Wirkung einer Federkraft (34) wieder in den Hubzylinder (28) geschoben wird.

10. Selbstladewagen nach einem oder mehreren der vorhergehenden Ansprüche,
**dadurch gekennzeichnet,**
**daß** die Bewegung der Kolbenstange (29) über einen Kipphebel (27) auf die Schaltkupplung (18) übertragen wird, dessen kupplungsseitiges Ende als Kulisse (31) oder Klaue (33) ausgeführt ist.

## Claims

1. A self-loading wagon (1) for transporting crop material (6), with which there is associated a pick-up device (3) which picks up the crop material from the ground and which is adjustable in respect of height by at least one stroke cylinder (14) and which transfers the crop material (6) to a conveyor device in the form of a conveyor and cutting rotor (8), wherein the pick-up device (3) and the conveyor device in the form of a conveyor or cutting rotor (8) are arranged in a drive train (23) comprising a plurality of drive members (15-22), **characterised in that** the drive train (23) is adapted to be interruptible in such a way that the transmission of power to the pick-up device (3) can be automatically shut off while the cutting and conveyor rotor (8) are further drivable.

2. A self-loading wagon according to claim 1 **characterised in that** associated with the drive train (23) is a shift clutch (18) to provide for interruptibility of the drive train.

3. A self-loading wagon according to one or more of the preceding claims **characterised in that** the shift procedure of the shift clutch (18) is triggered by way of an adjusting means (28) which is connected by way of a line system (36) and a control device (37) to the adjusting means, in the form of a stroke cylinder (14), of the pick-up device (3).

4. A self-loading wagon according to one or more of the preceding claims **characterised in that** the stroke cylinder (14) of the pick-up device (3) and the stroke cylinder (28) for triggering the shift procedure are so matched to each other in their cross-section that upon pressure actuation of the line system (36) connecting the two stroke cylinders (14, 28) firstly the stroke cylinder (14) always lifts the pick-up device (3) and it is only then that the stroke cylinder (28) triggers the shift procedure at the shift clutch (18).

5. A self-loading wagon according to one or more of the preceding claims **characterised in that** associated with the hydraulic line system (36) is a setting member which is in the form of a directional control valve (38) and which is electrically controllable by the control device (37) and which can be so actuated by the control device (37) that upon pressure actuation of the line system (36) connecting the two stroke cylinders (14, 28) firstly the stroke cylinder (14) always lifts the pick-up device (3) and it is only then that the stroke cylinder (28) triggers the shift procedure at the shift clutch (18).

6. A self-loading wagon according to claim 5 **characterised in that** the control device (37) can switch the directional control valve (38) in time-dependent or pressure-dependent relationship.

7. A self-loading wagon according to claim 6 **characterised in that** the time-dependency or pressure-dependency of the control device (37) is adjustable.

8. A self-loading wagon according to one or more of the preceding claims **characterised in that** the shift procedure-triggering stroke cylinder (28) does not directly engage the clutch but its movement of the piston rod (29) is transmitted to the clutch by means of further members (27, 29, 34) arranged on the self-loading wagon (1).

9. A self-loading wagon according to one or more of the preceding claims **characterised in that** the shift procedure-triggering stroke cylinder (28) is single-acting, wherein its piston rod (29) when the stroke cylinder (28) is pressure-less is pushed into the stroke cylinder (28) again by the action of a spring force (34).

10. A self-loading wagon according to one or more of the preceding claims **characterised in that** the movement of the piston rod (29) is transmitted to the shift clutch (18) by way of a tilt lever (27), the clutch end of which is in the form of a sliding guide (31) or claw (33).

## Revendications

1. Remorque autochargeuse (1) pour le transport de produit récolté (6), à laquelle est associé un dispositif de ramassage (3) du produit sur le sol, réglable en hauteur à l'aide d'au moins un vérin (14), lequel dispositif transfère le produit récolté (6) dans un dispositif de chargement réalisé sous la forme d'un rotor de transport et de coupe (8), le dispositif de ramassage (3) et le dispositif de chargement réalisé sous la forme d'un rotor de transport et de coupe (8) étant disposés dans une chaîne de transmission (23) comprenant plusieurs éléments de transmission (15-22), **caractérisée en ce que** la chaîne de transmission (23) est réalisée avec possibilité d'interruption de telle sorte que la transmission d'énergie vers le dispositif de ramassage (3) puisse être interrompue automatiquement pendant que le rotor de chargement et de coupe (8) continue à être entraîné.

2. Remorque autochargeuse selon la revendication 1, **caractérisée en ce qu'**un embrayage (18) est associé à la chaîne de transmission aux fins de permettre l'interruption de ladite chaîne de transmission.

3. Remorque autochargeuse selon une ou plusieurs des revendications précédentes, **caractérisée en ce que** le processus d'actionnement de l'embrayage (18) est déclenché par l'intermédiaire d'un organe de réglage (28), qui est relié par un système de conduites (36) et un appareil de commande (37) à l'organe de réglage du dispositif de ramassage (3) réalisé sous forme de vérin (14).

4. Remorque autochargeuse selon une ou plusieurs des revendications précédentes, **caractérisée en ce que** le vérin (14) du dispositif de ramassage (3) et le vérin (28) de déclenchement du processus d'actionnement sont mutuellement adaptés sur le plan de leur section, de telle sorte que lorsqu'une pression est appliquée au système de conduites (36) reliant les deux vérins (14, 28), dans toutes les situations, le vérin (14) relève d'abord le dispositif de ramassage (3) et ensuite seulement le vérin (28) déclenche le processus d'actionnement de l'embrayage (18).

5. Remorque autochargeuse selon une ou plusieurs des revendications précédentes, **caractérisée en ce qu'**un organe de réglage réalisé sous la forme d'un distributeur (38) commandé électriquement par l'appareil de commande (37) est associé au circuit hydraulique (36), lequel organe de réglage peut être commandé par l'appareil de commande (37) de telle sorte que lorsqu'une pression est appliquée au système de conduites (36) reliant les deux vérins (14, 28), dans toutes les situations, le vérin (14) relève d'abord le dispositif de ramassage (3) et ensuite seulement le vérin (28) déclenche le processus d'actionnement de l'embrayage (18).

6. Remorque autochargeuse selon la revendication 5, **caractérisée en ce que** l'appareil de commande (37) commande le distributeur en fonction du temps ou de la pression.

7. Remorque autochargeuse selon la revendication 6, **caractérisée en ce que** la dépendance du temps ou de la pression de l'appareil de commande (37) est réglable.

8. Remorque autochargeuse selon une ou plusieurs des revendications précédentes, **caractérisée en ce que** le vérin (28) de déclenchement du processus d'actionnement de l'embrayage n'agit pas directement sur l'embrayage, mais que le déplacement de sa tige de piston (29) est transmis à l'embrayage par d'autres organes (27, 29, 34) disposés sur la remorque autochargeuse (1).

9. Remorque autochargeuse selon une ou plusieurs des revendications précédentes, **caractérisée en ce que** le vérin (28) de déclenchement du processus d'actionnement de l'embrayage est du type à simple effet, sa tige de piston (29) étant rentrée dans le corps de vérin (28) par l'action d'un ressort (34) lorsqu'aucune pression n'est appliquée au vérin (29).

10. Remorque autochargeuse selon une ou plusieurs des revendications précédentes, **caractérisée en ce que** le déplacement de la tige de piston (29) est transmis à l'embrayage (18) par l'intermédiaire d'un culbuteur (27), dont l'extrémité côté embrayage est conformée en coulisse (31) ou en crabot (33).
